(19) Europäisches Patentamt
European Patent Office
Office européen des brevets

(11) **EP 2 852 819 B1**

(12) **EUROPEAN PATENT SPECIFICATION**

(45) Date of publication and mention
of the grant of the patent:
**06.03.2019 Bulletin 2019/10**

(51) Int Cl.:
***G01H 13/00*** (2006.01)  ***G01M 5/00*** (2006.01)
***G01H 1/00*** (2006.01)  ***G01P 15/00*** (2006.01)
***G01N 17/00*** (2006.01)  ***G01N 17/04*** (2006.01)

(21) Application number: **13794714.9**

(22) Date of filing: **27.03.2013**

(86) International application number:
**PCT/AU2013/000321**

(87) International publication number:
**WO 2013/173860 (28.11.2013 Gazette 2013/48)**

(54) **INTEGRITY OF A CIVIL STRUCTURE**

INTEGRITÄT EINES BAUWERKS

INTÉGRITÉ D'UNE STRUCTURE DE GÉNIE CIVIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.05.2012  AU 2012902103**

(43) Date of publication of application:
**01.04.2015  Bulletin 2015/14**

(73) Proprietor: **National ICT Australia Limited Eveleigh, NSW 2015 (AU)**

(72) Inventors:
• **RUNCIE, Peter**
  **Eveleigh, New South Wales 2015 (AU)**
• **BOULIS, Athanassios**
  **Eveleigh, New South Wales 2015 (AU)**
• **OTT, Maximilian**
  **Eveleigh, New South Wales 2015 (AU)**
• **BERRIMAN, Rodney**
  **Eveleigh, New South Wales 2015 (AU)**

• **TSELISCHCHEV, Yuriy**
  **Eveleigh, New South Wales 2015 (AU)**
• **RAKOTOARIVELO, Thierry**
  **Eveleigh, New South Wales 2015 (AU)**

(74) Representative: **Abel & Imray**
  **Westpoint Building**
  **James Street West**
  **Bath BA1 2DA (GB)**

(56) References cited:
**WO-A2-03/008926  WO-A2-2008/068761
DE-A1-102010 024 932  US-A- 4 901 575
US-A- 5 255 565  US-B1- 6 647 161**

• **HOU ET AL.: 'A substructure isolation method for local structural health monitoring' STRUCTURAL CONTROL AND HEALTH MONITORING vol. 18, no. 6, October 2011, pages 601 - 618 ., XP055285760**

**Description**

**Technical field**

This disclosure relates to the integrity of a civil structure, and in particular the assessment of the integrity of one or more joints of a civil structure. Aspects include a computer implemented method, software and a computer system. A person skilled in the art would understand computer system and software design.

**Background art**

A civil structure is typically a large structure and typically a public work, such as a bridge, dam or building.

Civil structures have joints between structural sub-components of the structure (substructures). Over time these joints lose some of their integrity as a result of weathering, fatigue and corrosion. To preserve the integrity of the structure early detection of deterioration is preferred and appropriate maintenance is performed, both preventative maintenance and/or reactive maintenance.

Detection is typically detected by periodic visual inspections or by observing the results of the loss of integrity, such as structural failure. This process can incur delays of weeks or months between damage and fault detection. During this time faults can propagate further, making repair more difficult and costly.

WO 2008/068761 (Technion Res & Dev Foundation) discloses a method for monitoring strain of a joint in response to perturbation applied. Technion Res & Dev Foundation discloses using sensors to measure the strain induced to the joint and data processor to analyse the response of the structure to the perturbation. Technion Res & Dev further discloses considering the transient response and frequency response measured at the sensor.

US 6,647,161 (Hodge) discloses a system for monitoring of structures. Hodge discloses a harness attached to a structure which allows multiple sensors, such as optical sensors, to be positioned on the structure. Hodge discloses that each sensor may be attached to a pulsed laser source by an optical fiber. Hodge discloses that the system may include circuitry that detects the arrival of the light pulse from each sensor. Hodge further discloses that relative movement shifts of various components of the structure may be detected.

DE 102010024932 (N Log Gmbh) discloses a measuring system for detecting loads and deformations of various structures. N Log Gmbh discloses that sensors such as acceleration sensors may be mounted at various points on the structure where high deformations or inclination changes are expected. N Log Gmbh further discloses forming a data profile from the sensor data.

WO 2003/008926 (Osmos) discloses a monitoring device for a structure. Osmos discloses using optical cords to obtain measurements over a long period of time and distance. Osmos discloses collecting specific information from the optical cords that may be stored or graphically analysed.

US 5,255,565 (Judd et al) discloses an apparatus for monitoring a vibrating structure. Judd et al discloses multiple sensors positioned along the structure that produce a data signal. Judd et al further discloses filtering the data signal to remove frequency components above a nominated maximum frequency of interest. The filtered signal may then be fed to a multiplexer to multiplex the filtered data in response to a channel address clock.

US 4,901,575 (Bohannan et al) discloses a method and apparatus for monitoring the structural acoustic signature of a structure in response to transient loads. Bohannan et al discloses detecting vibration frequencies transmitted by the structure. Bohannan et al further discloses comparing acoustic signatures in response to different transient loads.

"A substructure isolation method for local structural health monitoring" (Hou et al) discloses a method for monitoring of the health of a substructure of a structure. Hou et al discloses using force distortions to isolate substructures from the influences of the remaining structure, and to measure the response of the substructure.

**Summary**

In a first aspect there is provided a computer implemented method for assessing integrity of a structural joint of a civil structure in response to stress applied to the structural joint, the method comprising:

determining sensor data of two or more sensors, wherein each sensor is located on a different substructure of the structural joint;

wherein the substructures of the structural joint are in contact and apply a force to one another;
wherein the sensor data is indicative of a movement of each substructure of the structural joint in response to the stress;

determining time aligned sensor data of two or more sensors based on a time shift between the sensor data of the two or more sensors;
determining a measure of similarity between the time aligned sensor data of the two or more sensors, and

determining an integrity measure of the structural joint based on the measure of similarity.

This method provides the ability to assess accurately the integrity of structural joints in a continuous, real time and low cost manner by combining the sensor data in the determining the similarity step. It is an advantage of at least one embodiment that low accuracy sensors and high noise sensor signals can be used while still delivering high precision integrity assessment. It is yet a further advantage of at least one embodiment that precise placement of sensors is not required. It is yet a further advantage of at least one embodiment that the method assessed integrity is not subjective, as compared to human visual assessment, that is also reliable. It is a further advantage of at least one embodiment that maintenance can be reduced and the longevity of the structure itself is increased as more informed decisions can be made regarding when, where and how maintenance should be performed. It is yet a further advantage of at least one embodiment that prior knowledge of external loading on the structure or excitation is not required.

The measure of similarity may be based on a correlation of a pattern formed in time aligned sensor data of the two or more sensors.

The measure of similarity may be based on a measure of distance between the time aligned sensor data. It is an advantage of this embodiment that the actual values are not the major determining factor but instead the relative values of the sensor data. The measure of similarity may be further based on determining the average distance between the time aligned sensor data. The sensor data may substantially represent the magnitude of movement and not the direction of movement.

The method further comprises determining the integrity measure, wherein the greater the similarity determined by the step of determining the measure of similarity, the integrity measure is substantially greater.

In an alternative, the measure of similarity may be based on a cross-correlation in the sensor data of two or more sensors, such that increasing similarity is based on the maximum cross correlated sensor data occurring within a substantially shorter time period.

In this case, the measure of similarity may be further based on determining the time shift required to achieve maximum cross correlation of time aligned sensor data.

Also in this case, the measure of similarity may be based on a distribution of time shifts between cross correlated sensor data of two or more sensors when the similarity determined by the step of determining the measure of similarity is at maximum.

Further, the method may further comprise determining the integrity measure, wherein the narrower the distribution, the integrity measure is substantially greater.

Or alternatively, the method may further comprise determining the integrity measure, wherein the closer in time the sensor data of the two or more sensors are most similar as determined by the step of determining the measure of similarity, the integrity measure is substantially greater.

The method may further comprise receiving the sensor data.

The sensor data may relate to one or more time intervals when the joint is moving or under stress.

Part or all of the determining the measure of similarity step may be performed locally near the sensor itself.

Part or all of the determining the measure of similarity step may be performed remotely from the sensors.

One or more of the sensors may be accelerometers.

The method may further comprise determining the integrity measure.

The method may further comprise any one or more of:

displaying the integrity measure;
storing the integrity measure to computer memory;
raising a notification that the integrity measure is low; or
providing the integrity measure as input to a maintenance scheduling system for the structure.

In a second aspect there is provided software, that is computer readable instructions stored on a computer readable medium, that when executed by a computer causes the computer to perform the method described above.

In a third aspect there is provided a computer system to assess integrity of a structural joint of a civil structure in response to stress applied to the structural joint, the computer system comprising:

two or more sensors provided on different substructures of the structural joint, wherein each sensor generates sensor data associated with the substructure that that sensor is provided on;

wherein the substructures of the structural joint are in contact and apply a force to one another; and
wherein the sensor data is indicative of a movement of each substructure of the structural joint in response to the stress;

a processor to:

determine time aligned sensor data of the two or more sensors based on a time shift between the sensor data of the two or more sensors;
determine a measure of similarity between the time aligned sensor data of the two or more sensors; and

determine an integrity measure of the structural joint based on the measure of similarity.

Optional features described of the first aspects, where appropriate, similarly apply to the second and third aspects also described here.

**Brief description of the drawings**

Example(s) will now be described with reference to:

Fig. 1 is an example civil structure having structural joints.

Fig. 2 is an enlarged view of a structural joint shown in Fig. 1 and where sensors are provided.

Figs. 3 and 4 are schematic representations of an accelerometer sensor.

Fig. 5 is a flow chart showing an embodiment of the method for assessing an integrity of a structural joint.

Fig. 6 graphically shows the result of the similarity assessment of sensor data collected from three different joints.

Fig 7 graphically shows the result of the time shift distribution assessment from three different joints.

Fig. 8 is a schematic diagram of an example computer system that can perform this method.

Figs. 9(a) and 9(b) relate to the first detailed example of the method of determining integrity using a measure of similarity based on a correlation of a pattern formed in the time aligned sensor data.

Figs. 10(a), 10(b) and 10(c) relate to the second detailed example of the method of determining the integrity using a measure of similarity based on a distribution of time shifts between cross correlated sensor data when a measure of similarity is maximum.

**Examples of the invention**

A method, system and software for assessing integrity of one or more joints of a civil structure will now be described. The method provides the ability to monitor in real time the structural health of the civil structure.

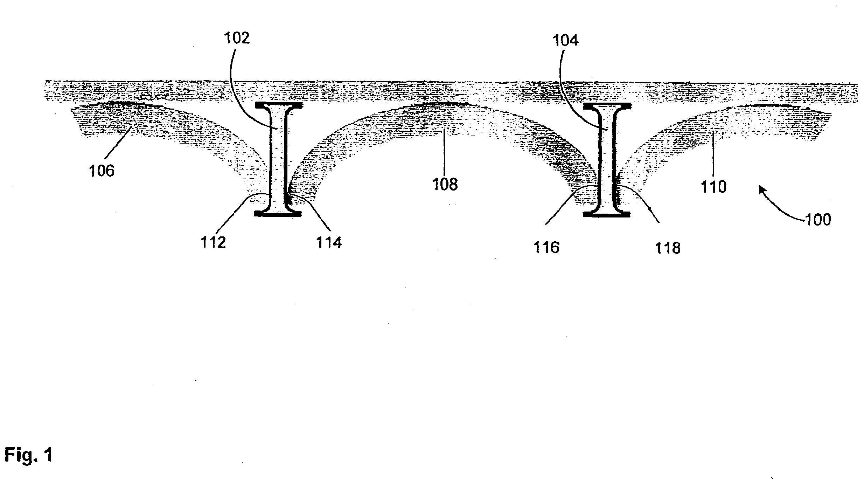

Fig. 1 illustrates a civil infrastructure 100, which in this case is a simplified side view of a bridge. It is to be appreciated that the method equally applies to any structure having one or more joints, being either public or private structures. Examples are dams and buildings. A joint is any two or more substructures of a structure that are in contact and typically apply a force to one or more of the other substructures at that joint. A substructure may be formal discrete components of the structure such as separate beams. Alternative, substructures may be less formally discrete, such as different parts (substructures) of the same component of a structure, such as different parts of the same beam as defined by a crack or separation in that beam.
In this example, the bridge 100 has substructures of I beams 102 and 104 and arches 106, 108 and 110. Joints are formed in this case between each I beam 102 and 104, and arches 106, 108 and 110 and are indicated at 112, 114, 116 and 118.
The method exploits the finding that when a joint is stressed and healthy (and inturn has high structural integrity), sensed movement of each substructure that forms the joint is substantially similar, such as in frequency or amplitude. This means that the joint is well connected. However, where a joint is not healthy and in turn has low structural integrity, sensed movement of each substructure that forms the joint is substantially different.
At each joint 112, 114, 116 and 118, sensors are placed on either side of the joint to measure the movement across that joint. That is a set of two or more sensors are placed at each joint with at least one sensor provided on two different substructures that form the joint. In this way multiple sensor readings per joint can be used to detect faults.

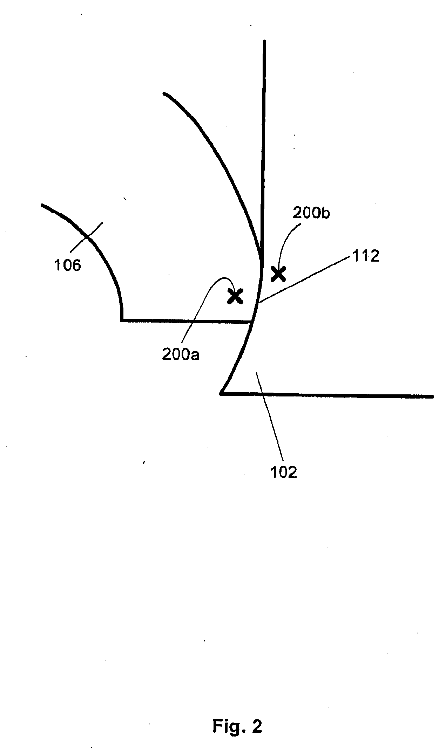

Joint 112 and the sensor placement is shown in more detail in Fig. 2 where a set of sensors 200a and 200b are provided to sense movement in that joint 112. A sensor is placed on either side of the joint 112, that is each one on each structural subcomponent that forms the joint and is simply typically glued. That is sensor 200a is placed on the arch 106 near the joint 112, and sensor 200b is placed on the I beam 102 also near the joint 112.

In this example, when vehicles drive on the bridge over a joint this puts the joint under stress and creates movement at the respective joint and in turn movement is sensed by the sensors.

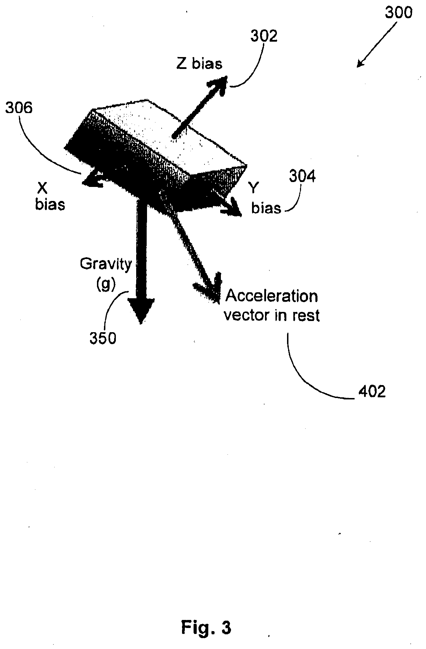

In this example the sensors at each joint 112, 114, 116 and 118, including sensors 200a and 200b are three dimensional accelerometers that are typically inexpensive. A schematic drawing of a three dimensional accelerometer 300 is shown in Fig. 3.

A single sensor reading of an accelerometer provides a measure of sensed acceleration for each of three independent (i.e. perpendicular) axes x 306 , y 304 and z 302, and therefore a single reading from a sensor returns an acceleration vector A: (x, y, z) in its own reference.

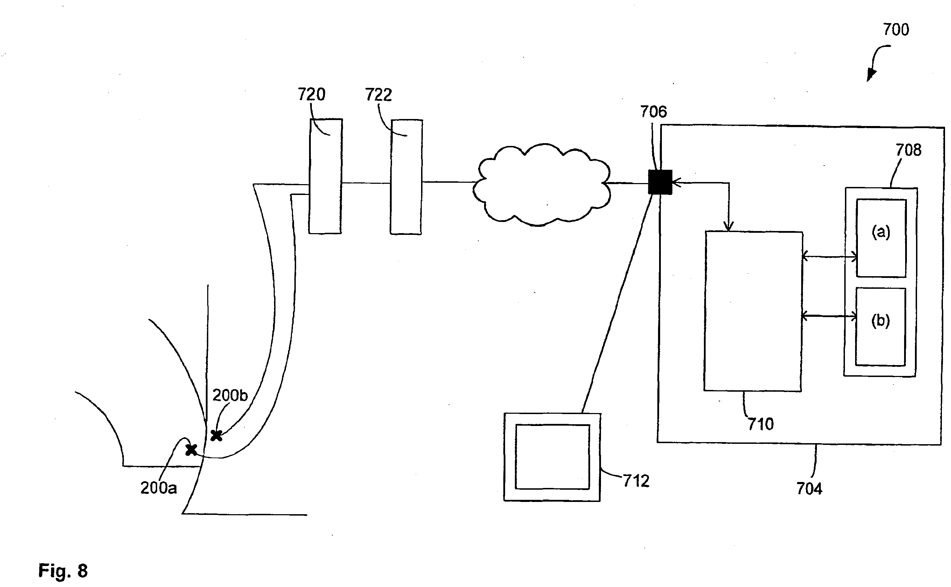

Fig. 8 illustrates a computer system 700 for assessing the integrity of a joint of a civil structure, in this case the joint 112.

In this example, computer system 700 comprises sensors 200a and 200b, an embedded computer system 720 and a communications device 722 located at the site of the civil structure. In this example, the sensors 200a, 200b, are connected to the embedded computer system 720 using I2C bus, and the embedded computer system 720 is connected to the communications device 722 using an onsite Ethernet network. It will be readily appreciated and by a person skilled in the art that a range of communications protocols - both wired and wireless - can suitably be used and the best communication method between 200a, 200b, 720 and 722 will be influenced by the physical arrangements and other constraints, such as weather elements and power requirements.

In this example, one embedded system 720 is provided for the two sensors 200a and 200b but it should be appreciated that the embedded system 720 could be connected to and receive sensor data from more sensors (not shown) associated with the same joint 112 or different joint(s). At the same time in this example the communications device 722 is shown to be connected to a single embedded system 720. It should be appreciated that the communications device 722 may receive sensor data from multiple embedded systems 720 (not shown).

Further, it will also be appreciated by a person skilled in the art that active repeater extensions (not shown) or other suitable communications technique depending on communications architecture selected for a particular implementation are used where appropriate to make the connections between 200a, 200b, 720 and 722.

In this example, the embedded computer system 720 receives sensor data from the sensors 200a and 200b and processes the data (described in further detail below). The processed sensor data is provided to the communications device 722. The communications device is able to transmit the received sensor data to the computer 700.

A person skilled in the art would appreciate that a wide area wired or wireless communications network is then used, such as the mobile telephony network, to communicate this sensor data that is then received at the input/output port 706. In this example, the communications device has 3G connectivity and/or ADSL connection. The sensor data may be sent using one or more communications protocols over the wide area communications network to then be received at the input/output port 706.

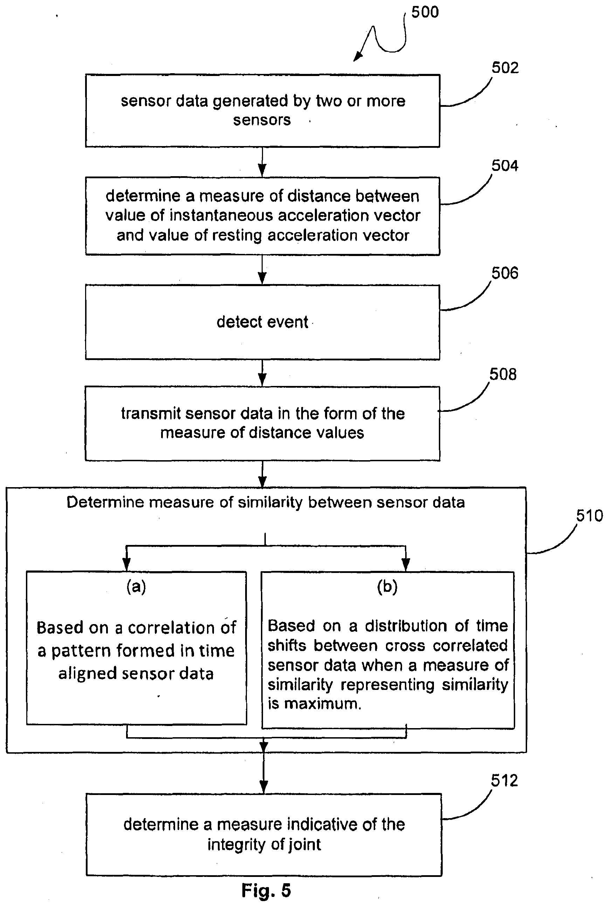

The received sensor data is stored in local memory 708(b) by the processor 710. The processor 710 uses application software also stored in memory 708(a) to perform the method shown in Fig. 5. In this sense the processor 710 performs the method of assessing an integrity measure of a structural joint

In this example the sensor data is received in substantially real time. However, in other embodiments the sensor data may be historic and already stored on memory 708(b) and accessed by processor 718 to perform the method. Alternatively, historic sensor data could be stored in the embedded system 720 and then communicated to the computer system 700.

The software provides a user interface that can be presented to the user on a monitor 712. The monitor 712 is able to display the result of the method, such a graphically. The result of the method can also be stored in memory 708(b).

The user input can also be provided by the user using input devices (not shown) and the user input is provided to the input/out port 706.

In this example the memory 708 is local to the computer 700, but alternatively could be remote to the computer 700, such as a cloud computer service.

The method of assessing integrity of the structural joint 112 of this example will now be described with reference to Fig. 5.

The method assumes that sensors are provided on the structure 100 as described above, that is two or more sensors in this case 200a and 200b are provided on two or more substructures 102 and 106 that from the structural joint 112. The computer system of Fig. 8 is also provided.

At a first step the sensors 200a and 200b generate 502 sensor data. That is, each sensor provides data on the movement of the substructure that it is associated with by virtue of its placement on that substructure. The sampling rate of the sensors is appropriate for the material of the component, such as 110Hz. Referring again to Fig. 3, each sample is comprised of an acceleration vector A: (x,y,z), together with a time stamp. The time stamp is of course synchronised with the other sensors surrounding the joint 112. Alternatively, the time stamp may be added to the sensor data by the embedded system 720 depending on the data transfer rate between sensors 200a and 200, and the embedded system.

In this example, the sensor data is then provided to the embedded system 720 that begins to process the sensor data.

To process the sensor data a measure of distance is determined 504 between the value of the instantaneous acceleration vector and the value of the resting acceleration vector. A measure of distance is understood by a person skilled in the art to be any suitable measure of comparison between the two vectors. An example of a measure of distance is the numerical difference between the values of the instantaneous and resting acceleration vectors.

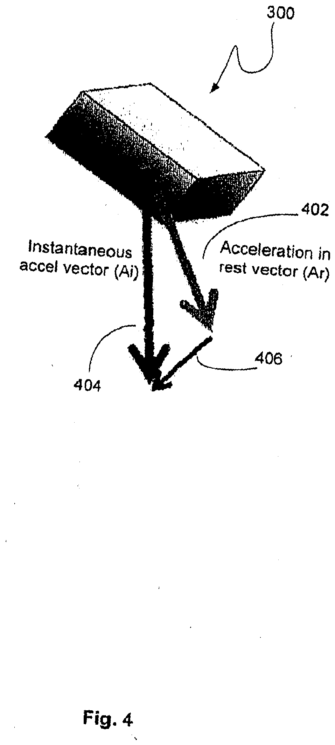

As shown in Figs. 3 and 4, the sensors 200a and 200b are accelerometers in arbitrary unknown positions so each accelerometer likely has a different orientation from the others on that same joint. Gravity 350 is always acting on the sensor meaning that the three values generated for each sensor sample depend on the orientation of the sensor 300. For example when at rest the values for each axis will be in accordance to their orientation with respect to gravity. Further, each sensor has different biases-in each axis ranging from 0.05g to 0.4g, significantly contributing to the values.

In this example readings from the sensors are taken as a distance from a rest position 402, rather than absolute measurements. In this way the expense of knowing the specific biases of an accelerometer and calibration to take account changes over time are avoided. Fig. 4 shows an accelerometer 400 with the acceleration vector at rest vector Ar 402 and a sample instantaneous accelerometer vector Ai 404 also shown. The vector that describes the measured distance between Ar 402 and Ai 404 is also shown at 406.

The orientation of this measured distance 406 depends on the orientation of the sensor 300. In this example orientation of the sensor is not known and therefore the orientation of the distance 406 is not considered. Instead only the value of the distance 406 is used.

In this example the measured distance is taken as the difference of the vectors magnitudes ‖Ar‖ - ‖Ai‖. This is the magnitude of the vector 406 shown in Fig. 4 and can be calculated as:

$$\sqrt{(Arx - Aix)^2 + (Ary - Aiy)^2 + (Arz - Aiz)^2} \qquad (1)$$

It will be understood that alternative calculations of the measured distance between Ar and Ai are possible, such as determining the magnitude of the difference vector ‖Ar-Ai‖ which can be calculated as:

$$\sqrt{Arx^2 + Ary^2 + Arz^2} - \sqrt{Aix^2 + Aiy^2 + Aiz^2} \qquad (2)$$

In this example, firstly the embedded system 722 determines the value of the acceleration vector at rest Ar 406 for each sensor 200a and 200b.

Using the determined value of the acceleration at rest Ar 402 vector the embedded system 722 determines the instantaneous difference between the time aligned sensor data values of the acceleration vectors 404 and the value of Ar 402 as described above. The method is performed in real time and continuously on the sensor data received from sensors 200a and 200b.

The embedded system continuously buffers the latest 2.5 seconds of data that is 2.5 seconds of the values of the distance measure 406.

The embedded system 720 time stamps the samples from 200a and 200b.

Next, it is determined 506 whether an event has occurred at the joint 112. An event is defined as an action or force that produces sufficient amount of movement or stress on a joint that will produce sensor samples suitable for use in this method. For example the embedded system 720 has an event threshold that could be a preset value expressed mG for example or a dynamic value as a function of the acceleration at rest. A simple example is to use a percentage. In the current example, a threshold of 100mg for ‖Ar‖- ‖Ai‖ is predetermined as a significant force on joint 112 typically representing the passage of a vehicle on the bridge 100 in the area on top of the joint 112. If the determined distance 406 for one or more of sensors 200a and 200b is greater than the threshold, then an event has been detected.

Once an event has been detected, the sensor data associated with the event, that is a predetermined time interval of sensor data that includes the time that the event was detected, from both sensors 200a and 200b is transmitted 508 to the computer 700. That is the current 2.5 seconds of buffered data at the embedded system 720 and the current determined value for the acceleration in rest vector 402 is transmitted to the communications device 722.

The communications device 722 then collects the received difference values, records them in a file and uses the communications network, such as a wireless wide area network, to transmit the content of the file to the computer 700.

The advantage of having some of the processing of the method distributed, that is at the site of the joint, is that it reduces the communication load between the communication device 722 and the computer 700 which helps to reduce the communication costs, delays at the computer 700 in receiving the sensor data in real time and achieve time synchronisation between sensor readings as received by the computer 700. Of course, while it is described that the measure of distance values of the sensor are transmitted, the unprocessed sensor values themselves could be transmitted and the measures of distance can be determined remotely.

Next, a measure of similarity between sensor data of the sensors provided on a joint is determined 510. A person skilled in the art would understand that a measure of similarity is any measure that can generally describe the similarity between the sensors. For example, a measure of similarity is a mathematical function F that defines a value between all elements of a given set S, such that if A and B are elements of S, then F(A,B) = F(B,A). Some examples of similarity measures are the Correlation Factor or the Sorensen index . It is worth noting that a measure of distance is also a measure similarity, for example the Euclidian distance is a measure of similarity.

Step 510 is described here in two different ways, 510(a) or 510(b).

Referring to 510(a), substructures that form a joint having high integrity will move as substantially in the same way, that is moving together as if they were in fact a single structure. That is the pattern (e.g. behaviour) of the sensor data measured (in this case difference from a rest position) will be correlated in time.

In this example, the similarity between pairs of time aligned difference values 406 of sensors 200a and 200b are compared. For example, pairs of sensors for 20 time shifts, +/- 10 sampling periods = +/- 50 ms. Let's name this function D(time shift). The similarity of the joint is then calculated as:

$$\text{similarity} = 1 - (\min(D(t)))/(\text{avg}(D(t)) \qquad (3)$$

A person in the art will understand that similarity between the time aligned sensor data can be performed using other mathematical operations that identify the correlation between the sensor data received from a joint. Examples include pattern matching methods, machine learning, and regression techniques based on measures of distance. However, we note a technique that simply looks at the difference between time aligned is typically not robust to noise and therefore is not a preferred similarity measure.

Using this method the event detection is distributed amongst the multiple embedded devices 720 meaning that the transmitted sensor data is not automatically aligned in time. All sensor samples includes the time stamp so when comparing difference values of 406 the processor 318 ensures that time aligned sensor values have the same time stamp are being compared, that is the difference between time aligned sensor data is compared.

The alternative method of 510(b) exploits that correlated sensed movement of each substructure of a healthy joint are occurring within a substantially short time period. At the same time, where a joint is not healthy and in turn has low structural integrity, any similar or correlated sensed movement of each substructure that forms the joint are occurring within a substantially large time period, which may be at least one order of magnitude larger than for an healthy joint.

The cross-correlation between time aligned sensor data of the sensors provided on a joint is determined for a given time shift t within a given range [-T,+T]. This calculation is done for all t within the range [-T,+T] and results in a series of cross-correlation value R. The given value Ri of this series is the cross-correlation for time shift t=i between the time aligned sensor data of the sensors provided on a joint.

Next the maximum value Rmax from the series R is selected. Thus Rmax represents the maximum achieved cross-correlation across all possible values of t over the range [-T,+T]. The specific t value at which Rmax occurs is further referred to as Tmax, and represents the time shift at which the maximum cross-correlation value is achieved.

The calculation of Rmax and Tmax are repeated for different subsequent independent time periods also referred to as events above. The resulting Tmax values from these repeated calculations represent a new series TS. Thus TS is the series of time shift values for which maximum cross-correlation is achieved between sensor data from sensors of a given joint.

The statistical distribution of the values within the TS series provides an indication of the integrity of the joint 112. If the joint is healthy, the TS distribution will be substantially narrow and have its mean or median around 0. If the joint is not healthy, the TS distribution will be substantially large and may have its mean or media different from 0.

Next, an integrity measure of the joint 112 is determined 512. If method 510(a) is used this may simply be the similarity result but more typically will represent a combination of the similarity determinations over a specific time period and reported for those time periods separately to give a broader long term view of the integrity of the joint.

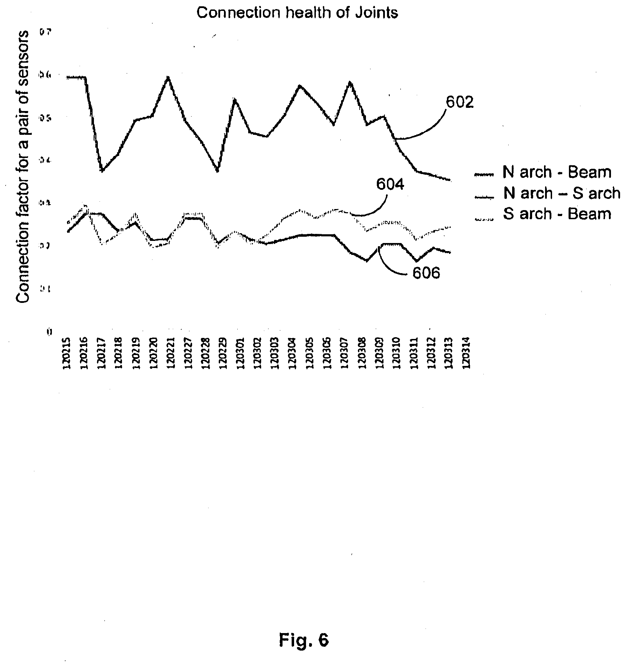

Fig. 6 shows graphically the integrity measure for three joints 602, 604 and 606. In this example, the x-axis represents time in days and the y-axis is the average result of the similarity for events measured on that day. In this example an integrity measure of more than 0.3 represents a lack of good integrity in the joint. It can be seen that the values of the integrity measure for joint 602 is always above 0.3 and this joint is now understood to have low integrity. This is to be compared with joint 604 and 606 having values of the integrity measure less than 0.3 meaning that there was similarity of acceleration in the substructures of joints 602 and this is indicative of good integrity of the joints 604 and 606.

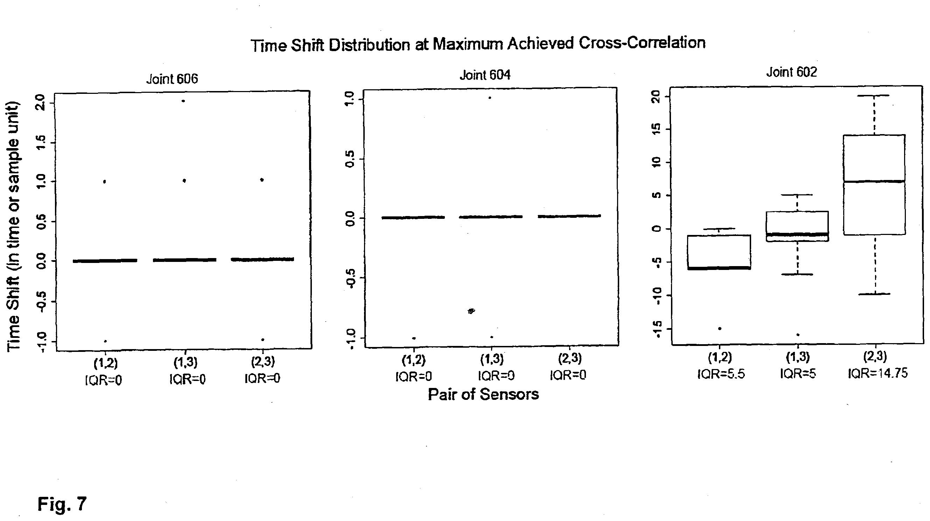

If the method in 510(b) is used, this integrity may simply be the numerical value of the size of the Interquartile Range (IQR) of the TS distribution. Figure 7 shows graphically the distribution of TS series for three joints. In this example the IQR measures for the TS series for joints 604 and 606 are substantially low and this is indicative of good integrity of the joint 604 and 606. This is to be compared with joint 602 having IQR measure of an order of magnitude larger, which is indicative of low integrity.

It is an advantage of this method that multiple sensor inputs are combined to form a virtual representation of.a structural joint. Behaviour of multiple joints can then be compared without knowledge of the underlying sensor orientation and placement. Also automatic calibration can be achieved even if the sensors are placed imprecisely.

FIRST DETAILED EXAMPLE

The following is a detailed example determining the integrity of a given joint on a civil structure using the method referenced above as 510(a). The result is a *Health Index* from the data collected by the sensors attached to the joint. This *Health Index* provides an indication of the structural integrity of the joint.

This algorithm is implemented in the 'sampleEvents' software which is deployed on the PC-type computing device, also known as a 'node'. This node is located on a given joint on the structure to be monitored (e.g. a joint of a bridge), and has a fixed number of sensors attached to it. The following description assumes (but is not limited to) 3 attached sensors. There may be an arbitrarily large number of nodes deployed on a given structure, for example a bridge with 500 joints may have 500 nodes, i.e. one attached each joint.

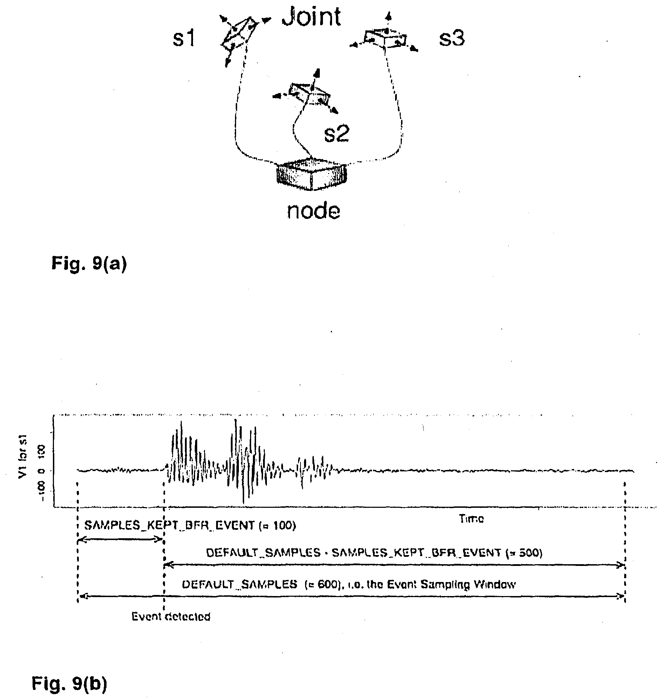

We are interested in monitoring the structural health of multiple joints on a Bridge. For each joint, we want to provide a single value, which gives a score on how healthy that joint is, i.e. 0=bad and 1=good health. To do so, at each joint we deploy a number of sensor to measure information across the joint. In the rest of this document, this number of sensor is referred to as MAX_SENSORS = 3 sensors (namely s1, s2, and s3). These 3 sensors are all connected to a single node as shown in Fig. 9(a), i.e there is one node per joint. This node is a PC-type computing device and gathers the information from the 3 sensors and compute a *Health Index* **H** for the joint.

The sensor is a 3D accelerometer, which returns an acceleration vector **A:** (**x,y,z**) (in its own reference). It is glued to the joint in an arbitrary unknown position. Thus a sensor on a joint has a different orientation from others on that same joint.

In the context of a joint, an Event is (loosely) defined as a time period during which a 'significant' physical action is applied on the joint, such as a motor vehicle driving across that joint. More specifically, we consider that an Event is started for a joint, when one of its sensor reports a difference from rest position (see below definitions) greater than a predetermined **threshold** value.

**Definition**

**Average Acceleration at Rest (Ar)**

In an ideal scenario, a sensor at rest (i.e. when no event is in progress) on an horizontal plane should return an acceleration **A:(0,0,-G).** However due to its arbitrary orientation once glued on the joint, the gravity component will be distributed along its 3 axes: **A:(Gx, Gy, Gz).** Moreover due to hardware biases, the real acceleration measured by a deployed sensor and will be **A:(Gx+Ex, Gy+Ey, Gz+Ez),** with (Ex,Ey,Ez) being the bias vector. One such a measurement is a sample.

We define the Average Acceleration at Rest **(Ar)** for a sensor as the average of A over a given number of samples M when there are no event occurring. (currently M = SAMPLES_AVG_CALCULATION = 200). We define **Ar:(Arx, Ary, Arz).**

**Scalar Differences from rest at instant i (V1 and V2)**

During the search for an Event and its entire duration, a sensor records at a given sampling time i an instantaneous acceleration: **A(i):(Aix, Aiy, Aiz)**

For that given sample i, we define 2 scalar difference metrics between the instantaneous and the rest accelerations:

- **Difference in magnitude: V1(i)** = **|A(i)| - |Ar|** = sqrt(Aix^2 + Aiy^2 + Aiz^2) - sqrt(Arx^2 + Ary^2 + Arz^2)

- **Magnitude of the differences: V2(i) = |A(i) - Ar|** = sqrt((Aix-Arx)^2 + (Aiy-Ary)^2 + (Aiz-Arz)^2)
- 

**Event Sampling Window**

Referring to Fig. 9(b), when an Event has been detected, we collect a fixed number of samples N around that event, with currently N = DEFAULT_SAMPLES = 600. More precisely, we collect SAMPLES_KEPT_BFR_EVENT = 100 samples prior to the Event starting point and a remaining DEFAULT_SAMPLES SAMPLES_KEPT_BFR_EVENT = 500 samples after that point. This is the event sampling window.

**Heuristic**

**Intuition & Overview**

During an event:

- (a) if a joint is **healthy,** all of its attached 3 sensors should "move together". Thus their difference in acceleration's magnitudes (V1) should be more or less "similar"
- (b) if a joint is **not healthy,** its 3 sensors should "move differently". Thus for one or more pair of sensors, their difference in acceleration's magnitudes (V1) should "strongly be different"
- (c) for a given sensor, if the magnitude of the difference (V2) between instantaneous and resting accelerations is "low", then the instantaneous acceleration vector might most probably be dominated by noise, and not provide information on how healthy the joint is.
  (note: empirical analysis of initial collected data supports (c), known healthy joints have low V2 values for their sensors)

Thus the heuristic to provide an Health Index of a joint, during an event is:

- we compute the difference between the V1(i) values for each pair of s1, s2 and s3, over all the measured N samples. This needs to account for the fact that a physical stimulus during an event may reach different sensors at slightly different time (i.e. shift in the sample numbers)
- we retain the minimum of these differences, and normalise it over all the computed difference
- we multiply that normalised minimum by a factor based on the maximum magnitude of the different accelerations (V2), to take into account the (c) intuition above
- the result of these operation gives us a value **h**
- we define the *Health Index* **H** as the 1-complement of **h** (i.e. H=1-h, as it often easier for the community to associate low values with faulty, rather than the
- contrary)

Interpretation:

When running this heuristic algorithm over a sufficiently large number of events and given (a), (b), (c) above, the averaged **H** for a given joint should be low if it is likely "faulty" and high if it is likely "healthy". The selection of a cut-off value for such a decision is currently done empirically using data from know faulty and healthy joints.

**Details of the current heuristic implementation**

The following is a detailed description of the implementation of the heuristic highlighted above.
Sampling and Triggering (implemented in the *timerHandler* method)
The sample collection and the detection of an event are done continuously through a block of tasks triggered by a periodic timer.
For each sensor

- wc first collect M = SAMPLES_AVG_CALCULATION = 200 samples to compute **Ar**:(Arx, Ary, Arz).
- Thus we have **Ar** = sum(Ai) / 200, with i = [1,200]
- for cach subsequent sample A(i), with i > 200

∘ we compute the magnitude of the difference between the instantaneous and rest accelerations:

$$\circ \quad \mathbf{V2(i)} = |\mathbf{Ar} - \mathbf{A(i)}|$$

∘ if this value is greater than the event detection **threshold** (= DEFAULT_THRESHOLD = 20 (mG)), then we assume that an event has started! This default threshold may be different for different nodes

  ▪ we continue the collection of an additional DEFAULT_SAMPLES - SAMPLES_KEPT_BFR_EVENT = 500 samples
  ▪ after that, we stop the sampling and pass the full Event Sampling Window holding 600 samples to the next task

∘ else we keep sampling and testing new samples as above
∘ (note: the use of a circular buffer of size DEFAULT_SAMPLES allows the Event Sampling Window to capture both 100 and 500 samples around the event detection)
∘

Energy Calculation (implemented in the *sampleEvent* method)

When a complete Event Sampling Window has been collected, the following tasks are executed:

• We stop the previous sampling and detection process, thus preventing further sampling while we process this event
• for each collected sample i of each sensor, we compute its V1(i) and V2(i) (as defined above)
•

Health Index Calculation (implemented in the *computeAggregates* method)

We compute a multiplying factor **K** based on the maximum measured magnitude difference, see intuition (c) above

• for each sensor, we pick the maxSamplesNum = 30 samples which have the highest **V2(i)** value, and compute their average
• we retain as **maxEncrgy** value the highest average
• if maxEnergy < lowerlimit (with lowerlimit = 2), then **K** = 0
• if maxEnergy > upperlimit (with upperlimit = 10), then **K** = 1
• else **K** = linear function of maxEnergy between lowerlimit and upperlimit
• K = maxEnergy * (1 / (upperlimit - lowerlimit)) - lowerlimit / (upperlimit - lowerlimit)
•

for each pair of sensor (A , B), and assuming SHIFT_LEN = 15

• for each shift value **u** in the range [-15,0[

  ∘ we compute the sum **diffShifted** of the absolute differences between A's V1(i) and B's V1(i+u) over all N samples diffShifted = sum of | V1 (A,i) - V1(B,i+u)</| over all samples i
  • for each shift value **u** in the range [0,15]

    ∘ we compute the sum **diffShifted** of the absolute differences between A's V1(i+u) and B's V1(i) over all N samples diffShifted = sum of |V1(A,i+u) - V1(Bi)| lover all samples **i**

  • we store in the variable **minDiff** the minimum computed diffShifted over all shifts **u** in both of the above cases
  • we accumulate in the variable **sumDiff** the sum of all the diffShifted over all shifts **u** in both of the above cases
  • we normalise **minDiff** over the sum of all the computed **diffShifted** above normalised_minDiff = minDiff / ((sumDiff - minDiff) / 2*SHIFT_LEN - 1) (Note 1: in the current running implementation this normalisation is done with the last divisor equal to SHIFT_LEN-1. This is an confirmed error, which seems not to significantly change the final result)
  (Note 2: this normalised_minDiff can be viewed as a "similarity index" between A's and B's V1)

We select minimum of the normalised_minDiff indexes **min_normalised_minDiff** over all pairs of sensors

Finally we define the **Health Index** of the joint **H** as:

**H** = **1 - K min_normalised_minDiff**

**Parameter Summary and Implications**

**threshold** = DEFAULT_THRESHOLD = 20 (mG)

Varying the threshold value will change the **V1** magnitude difference in a sensor's acceleration which is required to trigger an event. Thus this has an impact on the event detection. Smaller value will trigger an event for smaller changes in acceleration magnitude **V1.** This is a parameter for a given node, thus different nodes may have different configured threshold (nodes 44 and 45 for example have it at 75mg). This parameter configuration can be found in the config file that affect the execution of the sampleEvents daemon on each node. In the next version of this 'sampleEvent' software, we may decide to use a more generic method to detect an event, for example use a threshold which is equal to a percentage of the acceleration at rest.

DEFAULT_SAMPLES = 600 and SAMPLES_KEPT_BFR_EVENT = 100

Defines the sample range to capture around an event. A smaller range may miss the interesting information before/after an event, while a larger range may result in unnecessary non-relevant information being captured.

SHIFT_LEN = 15 (samples)

Varying this parameter will change the range of the +/- shift in sample positions applied to the data of a pair of sensor while comparing their **V1** magnitude difference. Thus this has an impact on the capability to compare data between a pair of sensor. Smaller values might result in similar magnitude differences not being detected (i.e. 'false negative'), higher value may detect false similar magnitude difference (i.e. 'false positive')

the **K** multiplying factor

Varying this parameter through its sub-parameters below will change the final Health Index value and its potential varying range returned by the heuristic.

- maxSamplesNum = 30
  Varying this parameter will change the number of samples used to compute the maximum **V2** magnitude difference. A given value assumes that any samples beyond that value does not add much to the averaged maximum **V2.** Thus smaller value may under-estimate that average, while higher value may result in unnecessary computation. This averaged maximum is one of the main component of the **K** multiplying factor.
- upperlimit = 10 and lowerlimit = 2
  Varying these parameter will change the range for the linear behaviour of the **K** multiplying factor. Smaller range makes the **K** factor act like a binary switch (jumping between 0 and 1) for taking into account the **V1** magnitude difference in the heuristic.

**Additional Notes**

The position of the sensors is only nominally unknown. We do have some idea of the way the sensors are glued. For example s2 is very close to a horizontal placement, so ideally (with no biases) Zr should be - g (= -256) and Xr and Yr should be 0. Reading the real Ar vector from s2 we can easily have a good estimate of the biases this sensor has.

Sensors s1 and s3 also have limited freedom in their placement, so again this can be inferred.

SECOND DETAILED EXAMPLE

The following is a detailed example determining the structural integrity of a given joint on a civil structure using the method referenced above as 510(b).

This second examples assumes the same context, assumptions and definitions as the first detailed example. The analysis presented in this document are implemented within a R scripting file, which is used within the R statistical environment software. Other implementations in other languages or platforms are possible.

**Analysis & Results**

**Overview**

We make the following hypotheses:

- if a joint is healthy, all of its attached 3 sensors should "move together". Thus their difference in acceleration's magnitudes (V1) should be more or less "similar" and that similarity should occur around the "same" point in time
- if a joint is not healthy, its 3 sensors should "move differently". Thus for one or more pair of sensors, their difference in acceleration's magnitudes (V1) should "strongly be different" and any weak remaining similarity should occur at "different" point in time
- Given these hypotheses and the fact that the data for one sensor is a Time Serie, we are interested in the cross-correlation between the **V1** data from two sensors on the same joint. For 2 given time series **s1** and **s2**, their cross-correlation (CCR) is a measure of how similar these series are across time. This CCR measure is often computed with a given time lag **T,** i.e. as one of the series may be slightly in advance or late compared to the other, the CCR is computed by applying a specific time shift (or lag) **T** to one of the series.

For the purpose of this document, the CCR value between s1 and s2 for a time shift T is given by the formula:

$$CCR = \frac{\sum_{i=1}^{n}[(s1(i) - ms1) * (s2(i - T) - ms2)]}{\sqrt{\sum_{i=1}^{n}(s1(i) - ms1)^2} * \sqrt{\sum_{i=1}^{n}(s2(i - T) - ms2)^2}}$$

with:

- **s1** and **s2** two time series of n samples
- **s1(i)** the value from the time series **s1** at time **i**
- **s2(i-T)** the value from the time series **s2** at time **i - T**
- **ms1** and **ms2** the mean of the time series **s1** and **s2,** respectively
- 

We know that:

- node 44 is the node which is attached to a faulty joint
- node 41, 42, 43, 45, and 46 are all attached to healthy joints
- 

**Trend of Max V1 CCR for various nodes**

We first plot the Maximum V1 CCR for different lag values, for different nodes, for a single event during 120815

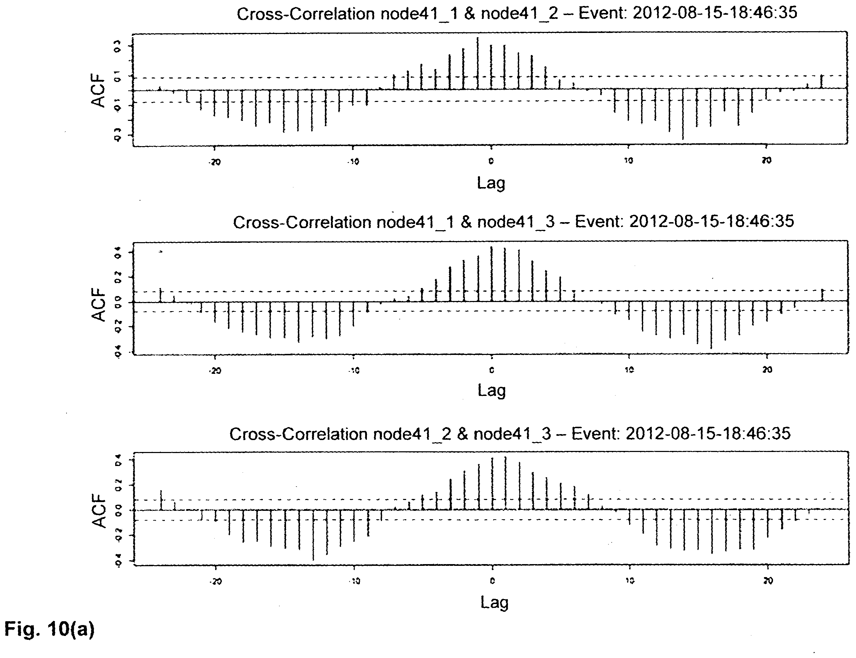

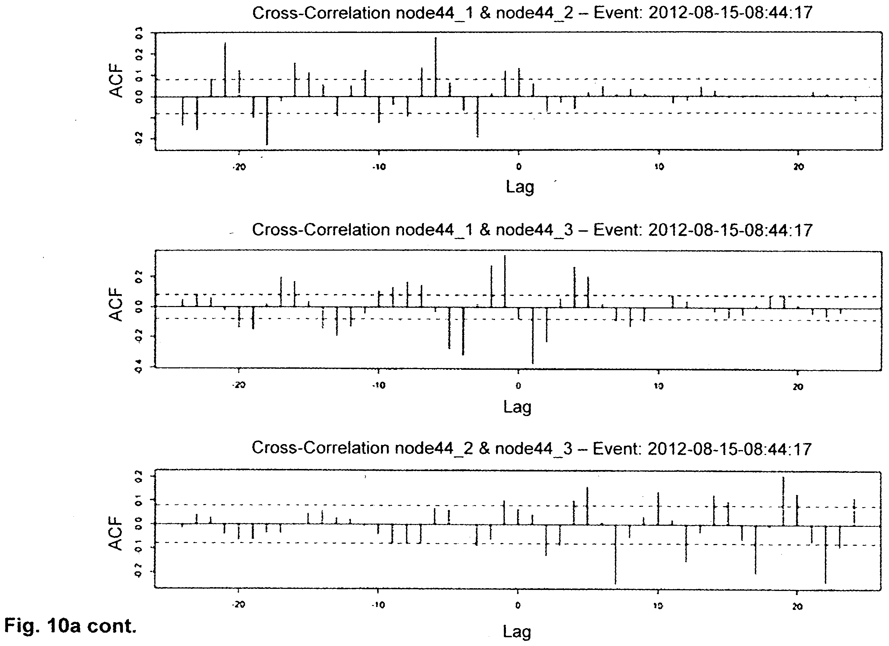

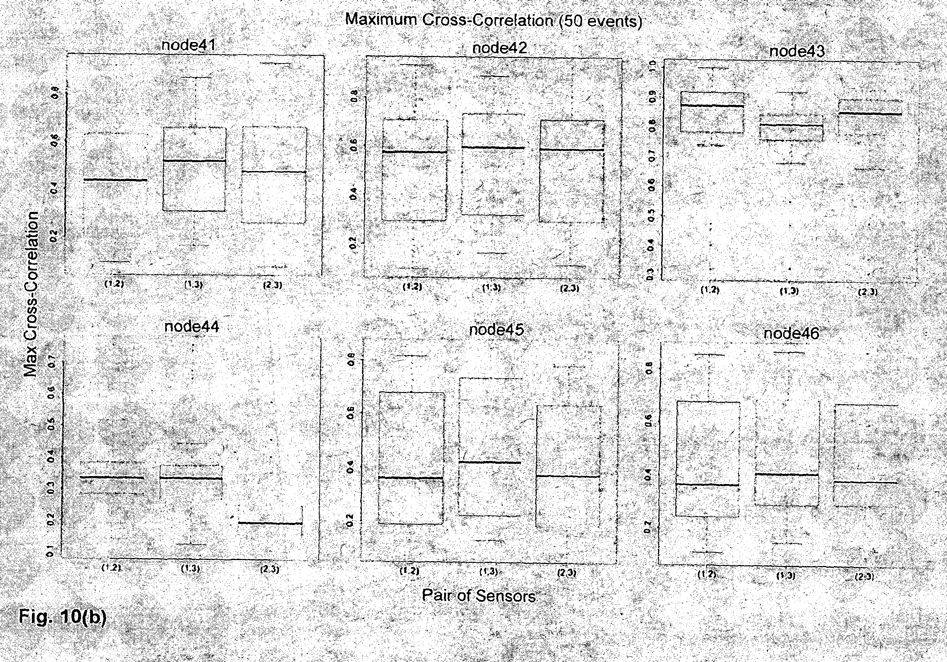

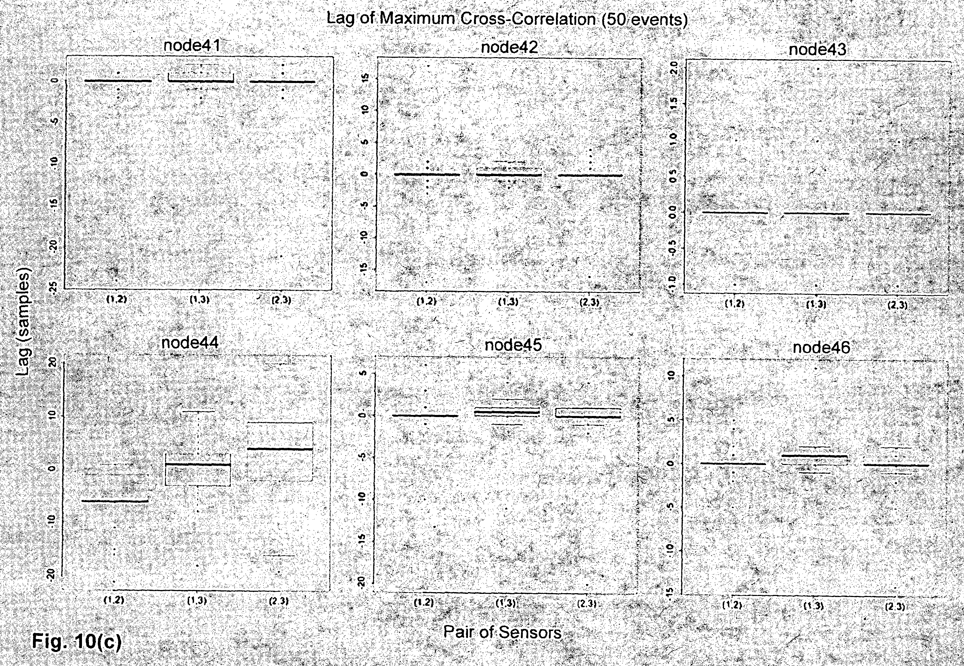

- An example of such plot for node41 (healthy) and node44 (faulty) are shown in Fig. 10.
- 

Observations:

- We see different patterns for different pair of sensors for different nodes
- Patterns for nodes on healthy joints seem to have a clearly visible peak of maximum CCR around T=0 time lag
- In contrast, for node44's patterns the peak of maximum CCR seems less distinct and further from T=0 time lag

**Trend of Max V1 CCR for a single node for various events**

To further explore the above observation, we plot the maximum V1 CCR as above, for a single node, for 10 random events during 120815
We do this for node41 (healthy) and node44 (faulty)

These 20 plots are overall similar to the ones shown in Fig. 10. These plots seem to confirm that the observations made in relation to the plots of Fig. 10 seem to hold across multiple random events

**Value and Location of Max V1 CCR for various nodes and events**

Following the above observation, we plot both:

- the distribution of the maximum V1 CCR for different nodes

- the distribution of the lag at which that maximum **V1** CCR occurs additionally these (i) and (ii) plots are done:

- for different number of events (10, 20, 50 events) during 120815
- for random or sequentially selected events
- with or without outlier points in the plots
-

The plots of Fig. 10(b) shows the distribution of the maximum CCR values for each node for 50 random events during one day.
The plot of Fig. 10(c) shows the distribution of the lag or time shift values when maximum CCR occurs for each node for 50 random events during one day.
Observations - Value of Max CCR:

- The distribution of the Max. CCR for the **healthy** node seem to be constantly above 0.3, but have different size of IQR, i.e. some of them have large spread IQR (e.g. node41, node45) others have small one (node43). In some cases these IQR for healthy node includes the 0.3 value.
- The distribution of the Max. CCR for the **faulty** node, and specifically for the pair of sensors (2,3) around the fault, seems to be constantly lower than 0.3 and focused around its median (i.e. low spread for its Inter Quartile Range, IQR)
- For the specific faulty node 44, the distribution for (1,3) seems to be higher than the distribution for (2,3). Given that the fault in-between (2,3) is also separating
- (1,3), we would expect the (1,3) and (2,3) distributions to be "similar"

Observations - Lag (i.e. location) of Max CCR:

- The distribution of the Lag of Max CCR for the **healthy** nodes seem to be clearly located around T=0 and have very narrow IQR between the range [0,1].
- The distribution of the Lag of Max CCR for the **faulty** node seems to be clearly located away from T=0 and have very broad IQR between [0,15], which is of an order of magnitude larger than for the healthy nodes.
- Removing the outliers from the plots do not change the above observation
-

General Observations

- The above observations are not clear for 10 events, but seems to be defined starting at 20 events, and are definitely clear at 50 events
- The above observations hold for both random and sequentially selected events

The combination of the distributions of both the value and time-location (= lag) of the maximum V1 cross-correlation (CCR) between pairs of sensors for a node seem to be a good indicator for the detection of a faulty joint.

- Indeed a faulty joint seems to be characterised by:

  ○ a narrow distribution of low values of max. V1 CCR ("low" < 0.3)
  ○ a wide distribution of high values of time shifts (or lags) when the max. V1 CCR occurs ("wide distribution" = an IQR of one order of magnitude higher than the IQRs for time shift distribution of healthy joint)

Thus an index of the structural integrity of a joint may be represented by the IQR value of the time shift distribution at maximum CCR value occurrence between the pairs of sensors of that joint. A higher IQR indicates a lower structural integrity.

For example, the sensor can provide the raw sampling data to the embedded computer that simply passes it to the computer 700 where all processing of the sensor data is performed. The embedded computer could be removed altogether in that case.

The processing of the sensor data is distributed as described with reference to the flow chart in Figure 5. The step of determining the similarity 510 may be done remotely and instead the result of the similarity assessment 510 or the final determined indication of the integrity of the joint 512 is transmitted from the communications device 722 to the appropriate computer system.

In a further example, the split between what amount of processing is done remotely and what is done by remote computer 700 can vary further. For example, further computing devices could be provided at the structure to assist in the distributed processing. Also, the split between what processing is done by which component, such as the embedded system 720 and the communications device 722 can also be varied, typically to get the more complex calculations to be performed by the device having the higher processing power which in turn improves the efficiency of the method.

Redundancy can be built into the sampling, such as sampling more often than data or placing more than one sensor on each substructure.

Where a joint has three or more sensors, sensors can be compared 510 altogether or in sets of two or more to determine an integrity measure of the substructures associated with the compared sensors. For example, where a joint has four sensors, unique combinations of two or three sensors can be compared to identify which substructure is not moving in the same way as the others of the same joint.

Further, the method can be expanded to compare the similarity of joints of the same structure, in this way integrity of the structure as a whole or its properties can be learnt.

Different sensors can be used. Further the similarity measure may incorporate analysis of the different sensor types.

Different data acquisition and data transmission methods could also be used.

The integrity measure can be used in maintenance scheduling algorithms to optimise maintenance.

The similarity determination can be extended to include application of machine learning techniques to automatically detect anomalies.

Where the joint is formed in a single component, such as joint created by a crack or suspected fault in that component, sensors are placed around the joint, with at least one sensor on each substructure of that component, in order to assess whether the structural integrity of the component of the structure is compromised.

The sensor where appropriate could be temperature sensors, acoustic sensors, pressure sensors, electrical conductivity sensors where the discontinuity caused by a failed joint results in different sensor readings than a good joint. As appropriate the actual comparison algorithm would be different in each case.

It should be understood that the techniques of the present disclosure might be implemented using a variety of technologies. For example, the methods described herein may be implemented by a series of computer executable instructions residing on a suitable computer readable medium. Suitable computer readable media may include volatile (e.g. RAM) and/or non-volatile (e.g. ROM, disk) memory, carrier waves and transmission media. Exemplary carrier waves may take the form of electrical, electromagnetic or optical signals conveying digital data steams along a local network or a publically accessible network such as the internet.

It should also be understood that, unless specifically stated otherwise as apparent from the following discussion, it is appreciated that throughout the description, discussions utilizing terms such as "estimating" or "generating" or "processing" or "computing" or "calculating", "optimizing" or "determining" or "displaying" or "maximising" or the like, refer to the action and processes of a computer system, or similar electronic computing device, that processes and transforms data represented as physical (electronic) quantities within the computer system's registers and memories into other data similarly represented as physical quantities within the computer system memories or registers or other such information storage, transmission or display devices.

**Claims**

1.  A computer implemented method for assessing integrity of a structural joint (112, 114, 116, 118, 602, 604, 606) of a civil structure (100) in response to stress applied to the structural joint, the method comprising:

    determining sensor data (502) of two or more sensors (200a, 200b, 300, 400), wherein each sensor is located on a different substructure (102, 104, 106, 108, 110) of the structural joint;

    wherein the substructures of the structural joint are in contact and apply a force to one another;

wherein the sensor data is indicative of a movement of each substructure of the structural joint in response to the stress;

determining time aligned sensor data of two or more sensors based on a time shift between the sensor data of the two or more sensors;
determining (510, 510(a), 510(b)) a measure of similarity between the time aligned sensor data of the two or more sensors; and
determining (512) an integrity measure of the structural joint based on the measure of similarity.

2. The method of claim 1, wherein the measure of similarity is based on a correlation of a pattern formed in time aligned sensor data of the two or more sensors.

3. The method of claim 1 or 2, wherein the measure of similarity is based on a measure of distance (406, 504) between the time aligned sensor data.

4. The method of claim 3, wherein the measure of similarity is further based on determining the average distance between the time aligned sensor data.

5. The method of claim 4, wherein the sensor data represents the magnitude of movement and not the direction of movement.

6. The method of any one of the preceding, wherein the method further comprises:
determining the integrity measure, wherein the greater the similarity determined by the step of determining the measure of similarity, the greater the integrity represented by the integrity measure.

7. The method of claim 1, wherein the measure of similarity is based on a cross-correlation in the sensor data of two or more sensors, such that increasing similarity is based on the maximum cross correlated sensor data occurring within a shorter time period.

8. The method of claim 7, wherein the measure of similarity is further based on determining a time shift required to achieve maximum cross correlation of time aligned sensor data.

9. The method of claim 1, 7 or 8, wherein the measure of similarity is based on a distribution of the time shifts between cross correlated sensor data of two or more sensors when similarity determined is at maximum.

10. The method of claim 9, wherein the method further comprises:
determining the integrity measure, wherein the narrower the distribution, the greater the integrity represented by the integrity measure.

11. The method of claim 7, 8, or 9, wherein the method further comprises:
determining the integrity measure, wherein the closer in time the sensor data of the two or more sensors are most similar as determined by the step of determining the measure of similarity, the greater the integrity represented by the integrity measure.

12. The method of any one of the preceding claims, wherein the method further comprises: receiving the sensor data.

13. The method of any one of the preceding claims, wherein the sensor data relates to one or more time intervals when the joint is moving or under stress.

14. The method of any one of the preceding claims, wherein part or all of the determining the measure of similarity step is performed locally near the sensor itself.

15. The method of any one of claims 1 to 13, wherein part or all of the determining the measure of similarity step is performed remotely from the sensors.

16. The method of any one of the preceding claims, wherein one or more of the sensors are accelerometers.

17. The method of claim 6, 10 or 11, wherein the method further comprises any one or more of:

displaying the integrity measure;
storing the integrity measure to computer memory;
raising a notification that the integrity measure is low; or
providing the integrity measure as input to a maintenance scheduling system for the structure.

18. A computer readable medium having computer readable instructions stored therein, that when executed by a computer causes the computer to perform any one or more of claims 1 to 17.

19. A computer system (700, 720) to assess integrity of a structural joint (112, 114, 116, 118, 602, 604, 606) of a civil structure (100) in response to stress applied to the structural joint, the computer system comprising:

two or more sensors (200a, 200b, 300, 400) provided on different substructures (102, 104, 106, 108, 110) of the structural joint, wherein each sensor generates sensor data (502) associated with the substructure that that sensor is provided on;

wherein the substructures of the structural joint are in contact and apply a force to one another; and
wherein the sensor data is indicative of a movement of each substructure of the structural joint in response to the stress;

a processor to:

determine time aligned sensor data of the two or more sensors based on a time shift between the sensor data of the two or more sensors;
determine (510, 510(a), 510(b)) a measure of similarity between the time aligned sensor data of the two or more sensors; and

determine (512) an integrity measure of the structural joint based on the measure of similarity.

## Patentansprüche

1. Computerimplementiertes Verfahren zum Bewerten des Bauzustands einer tragenden Verbindung (112, 114, 116, 118, 602, 604, 606) eines Bauwerks (100) als Reaktion auf eine Belastung, die auf die tragende Verbindung wirkt, wobei das Verfahren umfasst:

Bestimmen von Sensordaten (502) von zwei oder mehr Sensoren (200a, 200b, 300, 400), wobei jeder Sensor auf einer Unterkonstruktion (102, 104, 106, 108, 110) der tragenden Verbindung angeordnet ist;

wobei die Unterkonstruktionen der tragenden Verbindung in Kontakt stehen und eine Kraft aufeinander ausüben;
wobei die Sensordaten eine Bewegung von jeder Unterkonstruktion der tragenden Verbindung als Reaktion auf die Spannung anzeigen;

Bestimmen zeitlich ausgerichteter Sensordaten von zwei oder mehr Sensoren basierend auf einer Zeitverschiebung zwischen den Sensordaten der zwei oder mehr Sensoren;
Bestimmen (510, 510(a), 510(b)) eines Ähnlichkeitsmaßes zwischen den zeitlich ausgerichteten Sensordaten der zwei oder mehr Sensoren; und
Bestimmen (512) eines Bauzustandmaßes der tragenden Verbindung basierend auf dem erfassten Ähnlichkeitsmaß.

2. Verfahren nach Anspruch 1, wobei das Ähnlichkeitsmaß auf einer Korrelation eines Musters basiert, das in zeitlich ausgerichteten Sensordaten der zwei oder mehr Sensoren gebildet wird.

3. Verfahren nach Anspruch 1 oder 2, wobei das Ähnlichkeitsmaß auf einem Abstandsmaß (406, 504) zwischen den zeitlich ausgerichteten Sensordaten basiert.

4. Verfahren nach Anspruch 3, wobei das Ähnlichkeitsmaß ferner auf dem Bestimmen des durchschnittlichen Abstands zwischen den zeitlich ausgerichteten Sensordaten basiert.

**5.** Verfahren nach Anspruch 4, wobei die Sensordaten die Größe der Bewegung und nicht die Bewegungsrichtung darstellen.

**6.** Verfahren nach einem der vorhergehenden Ansprüche, wobei das Verfahren ferner umfasst:
Bestimmen des Bauzustandsmaßes, wobei je größer die Ähnlichkeit ist, die durch den Schritt des Bestimmens des Ähnlichkeitsmaßes bestimmt wird, desto größer ist der Bauzustand, der durch das Bauzustandmaß dargestellt wird.

**7.** Verfahren nach Anspruch 1, wobei das Ähnlichkeitsmaß auf einer Kreuzkorrelation in den Sensordaten von zwei oder mehr Sensoren basiert, so, dass eine zunehmende Ähnlichkeit auf den maximalen kreuzkorrelierten Sensordaten basiert, die in einem kürzeren Zeitraum auftreten.

**8.** Verfahren nach Anspruch 7, wobei das Ähnlichkeitsmaß ferner auf dem Bestimmen einer Zeitverschiebung basiert, die erforderlich ist, um eine maximale Kreuzkorrelation von zeitlich ausgerichteten Sensordaten zu erreichen.

**9.** Verfahren nach Anspruch 1, 7 oder 8, wobei das Ähnlichkeitsmaß ferner auf einer Verteilung der Zeitverschiebungen zwischen kreuzkorrelierten Sensordaten von zwei oder mehr Sensoren basiert, wenn die bestimmte Ähnlichkeit maximal ist.

**10.** Verfahren nach Anspruch 9, wobei das Verfahren ferner umfasst:
Bestimmen des Bauzustandmaßes, wobei der durch das Bauzustandmaß dargestellte Bauzustand umso größer ist, je enger die Verteilung ist.

**11.** Verfahren nach Anspruch 7, 8 oder 9, wobei das Verfahren ferner umfasst:
Bestimmen des Bauzustandmaßes, wobei der durch das Bauzustandmaß dargestellte Bauzustand umso größer ist, je zeitlich näher die Sensordaten der zwei oder mehr Sensoren am ähnlichsten sind, wie durch den Schritt des Bestimmens des Ähnlichkeitsmaßes bestimmt wurde.

**12.** Verfahren nach einem der vorhergehenden Ansprüche, wobei das Verfahren ferner umfasst:
Empfangen der Sensordaten.

**13.** Verfahren nach einem der vorhergehenden Ansprüche, wobei sich die Sensordaten auf ein oder mehrere Zeitintervalle beziehen, wenn die Verbindung sich bewegt oder unter Belastung steht.

**14.** Verfahren nach einem der vorhergehenden Ansprüche, wobei der Schritt des Bestimmens des Ähnlichkeitsmaßes teilweise oder ganz lokal in der Nähe des Sensors selbst durchgeführt wird.

**15.** Verfahren nach einem der Ansprüche 1 bis 13, wobei der Schritt des Bestimmens des Ähnlichkeitsmaßes teilweise oder ganz entfernt von den Sensoren durchgeführt wird.

**16.** Verfahren nach einem der vorhergehenden Ansprüche, wobei ein oder mehrere der Sensoren Beschleunigungsmesser sind.

**17.** Verfahren nach Anspruch 6, 10 oder 11, wobei das Verfahren ferner einen oder mehrere der folgenden Schritte umfasst:

Anzeigen des Bauzustandmaßes;
Speichern des Bauzustandmaßes in einem Computerspeicher;
Erzeugen einer Benachrichtigung, dass das Bauzustandmaß niedrig ist, oder
Bereitstellen des Bauzustandmaßes als Eingabe in ein Wartungsplanungssystem für die Konstruktion.

**18.** Computerlesbares Medium, auf dem computerlesbare Anweisungen gespeichert sind, so dass bei Ausführung durch einen Computer der Computer veranlasst wird, einen oder mehrere der Ansprüche 1 bis 17 durchzuführen.

**19.** Computersystem (700, 720), zum Bewerten des Bauzustands einer tragenden Verbindung (112, 114, 116, 118, 602, 604, 606) eines Bauwerks (100) in Reaktion auf eine Belastung, die auf die tragende Verbindung wirkt, wobei das Computersystem umfasst:

zwei oder mehr Sensoren (200a, 200b, 300, 400), die an verschiedenen Unterkonstruktionen (102, 104, 106, 108, 110) der tragenden Verbindung vorgesehen sind, wobei jeder Sensor Daten (502) erzeugt, die der Unterkonstruktion, an der dieser Sensor vorgesehen ist, zugeordnet sind;

wobei die Unterkonstruktionen der tragenden Verbindung in Kontakt stehen und eine Kraft aufeinander ausüben; und
wobei die Sensordaten eine Bewegung von jeder Unterkonstruktion der tragenden Verbindung als Reaktion auf die Belastung anzeigen;

einen Prozessor zum

Bestimmen zeitlich ausgerichteter Sensordaten der zwei oder mehr Sensoren basierend auf einer Zeitverschiebung zwischen den Sensordaten der zwei oder mehr Sensoren;
Bestimmen (510, 510(a), 510(b)) eines Ähnlichkeitsmaßes zwischen den zeitlich ausgerichteten Sensordaten der zwei oder mehr Sensoren; und

Bestimmen (512) eines Bauzustandmaßes der tragenden Verbindung basierend auf dem Ähnlichkeitsmaß.

## Revendications

1. Procédé, mis en oeuvre par ordinateur, d'évaluation de l'intégrité d'un joint structural (112, 114, 116, 118, 602, 604, 606) d'une structure de génie civil (100) en réponse à une contrainte appliquée au joint structural, le procédé comprenant les étapes ci-dessous consistant à :

déterminer des données de capteurs (502) de deux capteurs ou plus (200a, 200b, 300, 400), où chaque capteur est situé sur une sous-structure différente (102, 104, 106, 108, 110) du joint structural ;

où les sous-structures du joint structural sont en contact et s'appliquent mutuellement une force ;
où les données de capteurs sont indicatives d'un mouvement de chaque sous-structure du joint structural en réponse à la contrainte ;

déterminer des données de capteurs alignées dans le temps de deux capteurs ou plus sur la base d'un décalage temporel entre les données de capteurs des deux capteurs ou plus ;
déterminer (510, 510(a), 510(b)) une mesure de similarité entre les données de capteurs alignées dans le temps des deux capteurs ou plus ; et
déterminer (512) une mesure d'intégrité du joint structural sur la base de la mesure de similarité.

2. Procédé selon la revendication 1, dans lequel la mesure de similarité est basée sur une corrélation d'un motif formé dans des données de capteurs alignées dans le temps des deux capteurs ou plus.

3. Procédé selon la revendication 1 ou 2, dans lequel la mesure de similarité est basée sur une mesure de distance (406, 504) entre les données de capteurs alignées dans le temps.

4. Procédé selon la revendication 3, dans lequel la mesure de similarité est en outre basée sur la détermination de la distance moyenne entre les données de capteurs alignées dans le temps.

5. Procédé selon la revendication 4, dans lequel les données de capteurs représentent l'amplitude de mouvement et non la direction de mouvement.

6. Procédé selon l'une quelconque des revendications précédentes, où procédé comprend en outre l'étape ci-dessous consistant à :
déterminer la mesure d'intégrité, où plus la similarité déterminée à l'étape de détermination de la mesure de similarité est grande, plus l'intégrité représentée par la mesure d'intégrité est grande.

7. Procédé selon la revendication 1, dans lequel la mesure de similarité est basée sur une corrélation croisée dans les données de capteurs de deux capteurs ou plus, de sorte qu'une similarité croissante est basée sur les données de capteurs présentant une corrélation croisée maximale se produisant au cours d'une période de temps plus courte.

8. Procédé selon la revendication 7, dans lequel la mesure de similarité est en outre basée sur la détermination d'un décalage temporel nécessaire pour atteindre une corrélation croisée maximale de données de capteurs alignées dans le temps.

9. Procédé selon la revendication 1, 7 ou 8, dans lequel la mesure de similarité est basée sur une répartition des décalages temporels entre des données de capteurs à corrélation croisée de deux capteurs ou plus lorsque la similarité déterminée est au maximum.

10. Procédé selon la revendication 9, où le procédé comprend en outre l'étape ci-dessous consistant à :
déterminer la mesure d'intégrité, où plus la répartition est étroite, plus l'intégrité représentée par la mesure d'intégrité est grande.

11. Procédé selon la revendication 7, 8 ou 9, où le procédé comprend en outre l'étape ci-dessous consistant à :
déterminer la mesure d'intégrité, où plus les données de capteurs des deux capteurs ou plus sont le plus similaires dans le temps, tel que déterminé à l'étape de détermination de la mesure de similarité, plus l'intégrité représentée par la mesure d'intégrité est grande.

12. Procédé selon l'une quelconque des revendications précédentes, dans lequel le procédé comprend en outre l'étape ci-dessous consistant à :
recevoir les données de capteurs.

13. Procédé selon l'une quelconque des revendications précédentes, dans lequel les données de capteurs se rapportent à un ou plusieurs intervalles de temps lorsque le joint structural est en mouvement ou sous contrainte.

14. Procédé selon l'une quelconque des revendications précédentes, dans lequel une partie ou la totalité de l'étape de détermination de la mesure de similarité est mise en oeuvre localement à proximité du capteur lui-même.

15. Procédé selon l'une quelconque des revendications 1 à 13, dans lequel une partie ou la totalité de l'étape de détermination de la mesure de similarité est mise en oeuvre à distance des capteurs.

16. Procédé selon l'une quelconque des revendications précédentes, dans lequel l'un ou plusieurs des capteurs sont des accéléromètres.

17. Procédé selon la revendication 6, 10 ou 11, où le procédé comprend en outre l'une quelconque ou plusieurs des étapes ci-dessous consistant à :

afficher la mesure d'intégrité ;
stocker la mesure d'intégrité dans une mémoire d'ordinateur ;
envoyer une notification indiquant que la mesure d'intégrité est faible ; ou
fournir la mesure d'intégrité en tant qu'entrée dans un système de planification d'entretien de la structure.

18. Support lisible par ordinateur dans lequel sont stockées des instructions lisibles par ordinateur, qui, lorsqu'elles sont exécutées par un ordinateur, amènent l'ordinateur à mettre en oeuvre l'une quelconque ou plusieurs des revendications 1 à 17.

19. Système informatique (700, 720) pour évaluer l'intégrité d'un joint structural (112, 114, 116, 118, 602, 604, 606) d'une structure de génie civil (100) en réponse à une contrainte appliquée au joint structural, le système informatique comprenant :

deux capteurs ou plus (200a, 200b, 300, 400) disposés sur différentes sous-structures (102, 104, 106, 108, 110) du joint structural, où chaque capteur génère des données de capteurs (502) associées à la sous-structure sur laquelle ledit capteur est disposé ;

où les sous-structures du joint structural sont en contact et s'appliquent mutuellement une force ; et
où les données de capteurs sont indicatives d'un mouvement de chaque sous-structure du joint structural en réponse à la contrainte ;

un processeur destiné à :

déterminer des données de capteurs alignées dans le temps des deux capteurs ou plus sur la base d'un décalage temporel entre les données de capteurs des deux capteurs ou plus ;
déterminer (510, 510(a), 510(b)) une mesure de similarité entre les données de capteurs alignées dans le temps des deux capteurs ou plus ; et

déterminer (512) une mesure d'intégrité du joint structural sur la base de la mesure de similarité.

Fig. 1

**Fig. 2**

Fig. 3

Fig. 4

500

502

sensor data generated by two or more sensors

504

determine a measure of distance between value of instantaneous acceleration vector and value of resting acceleration vector

506

detect event

508

transmit sensor data in the form of the measure of distance values

Determine measure of similarity between sensor data

510

(a)

Based on a correlation of a pattern formed in time aligned sensor data

(b)

Based on a distribution of time shifts between cross correlated sensor data when a measure of similarity representing similarity is maximum.

512

determine a measure indicative of the integrity of joint

**Fig. 5**

Connection health of Joints

Fig. 6

Time Shift Distribution at Maximum Achieved Cross-Correlation

Fig. 7

Fig. 8

**Fig. 9(a)**

**Fig. 9(b)**

Fig. 10(a)

EP 2 852 819 B1

**Cross-Correlation node44_1 & node44_2 – Event: 2012-08-15-08:44:17**

**Cross-Correlation node44_1 & node44_3 – Event: 2012-08-15-08:44:17**

**Cross-Correlation node44_2 & node44_3 – Event: 2012-08-15-08:44:17**

**Fig. 10a cont.**

Fig. 10(b)

Fig. 10(c)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008068761 A
- US 6647161 B
- DE 102010024932
- WO 2003008926 A
- US 5255565 A, Judd
- US 4901575 A, Bohannan